# EUROPEAN PATENT APPLICATION

(11) **EP 1 049 297 A2**
(43) Date of publication of application: **02.11.2000**
(21) Application number: 00105335.4
(22) Date of filing: 16.03.2000
(51) Int. Cl.: H04L 12/56

(54) **Method of providing quality of service agreement across network boundaries**

(30) Priority: 01.04.1999 US 285111
(71) Applicant: AT&T Corp., New York, NY 10013-2412 (US)
(72) Inventor: Tow, Agnes C., Middletown, NJ 07748 (US); Yu, Yung-Chao, Manalapan, NJ 07726 (US); Zhang, Leah, Holmdel, NJ 07733 (US)
(74) Representative: Modiano, Guido, Dr.-Ing.

(57) **Abstract**

A method and arrangement for implementing a service level agreement (SLA) across network boundaries between carriers. An existing peering agreement is enhanced to include a set of agreed-upon quality of service parameters that are implemented by both carriers. The SLA may contain bandwidth allocation requirements for different types of IP traffic, reserving a selected portion of the bandwidth for "high priority" traffic, such as IP telephony.

## Description

### Field of the Invention

The present invention relates to the transport of IP traffic across network boundaries and, more particularly, to the implementation and use of a service level agreement (SLA) as an enhancement to an existing peering agreement, to implement and enforce a bilateral set of quality of service (QoS) parameters between a pair of carrier networks for the transport of IP services.

### Background of the Invention

There currently exists multiple QoS protocols for both hardware vendors and software vendors related to various products so as to enable an Internet Service Provider (ISP) to offer QoS network for different applications and value-added services, such as IP telephony, IP messaging, video conferencing, among others. Within a single carrier's network, the transport of such value-added services requires only that the network maintain common QoS requirements from node to node. However, when such IP traffic is to be transported from one carrier network to another through the Internet, there is no such set of common requirements between carriers. As a result, inter-network IP traffic may not always be handled in the manner expected by end-users sitting in different carrier networks.

### Summary of the Invention

The need remaining in the prior art is addressed by the present invention, which relates to the transport of IP traffic across network boundaries and, more particularly, to the implementation and use of a service level agreement (SLA) as an enhancement to an existing peering agreement, to implement and enforce a bilateral set of quality of service (QoS) parameters between a pair of carrier networks for the transport of IP services.

In accordance with the present invention, a routing registry database is enhanced to incorporate a set of agreed-upon QoS parameters negotiated between a pair of carriers. This set of agreed-upon QoS parameters is referred to hereinafter as the "Service Level Agreement", or SLA. The QoS parameters may include, for example, prioritized bandwidth allocation for different types of traffic (e.g., IP telephony, IP messaging, video conferencing, among others), a percentage of allowable data packet drop, noise level, jitter, etc.

By storing the SLA with the peering agreement included within a routing registry, each carrier's backbone is capable of retrieving the QoS parameters in the course of obtaining routing information. The routers within each carrier's network may then be configured in accordance with the retrieved QoS parameters and therefore transport IP traffic across the network boundary in an agreed-upon fashion.

In accordance with the present invention, a routing registry that also stores the SLA should be a "private" routing registry in the sense that only the two carriers may access this bilateral SLA information. The various customer networks that connect to these carrier's network have no need to access this SLA data.

Other and further features of the present invention will become apparent during the course of the following discussion and by reference to the accompanying drawings.

### Brief Description of the Drawings

Referring now to the drawings,
FIG. 1 illustrates an exemplary prior art arrangement for transporting IP services traffic between networks; and
FIG. 2 illustrates an arrangement formed in accordance with the present invention that utilizes an SLA to provide an agreed-upon QoS for various IP services transported between networks.

### Detailed Description

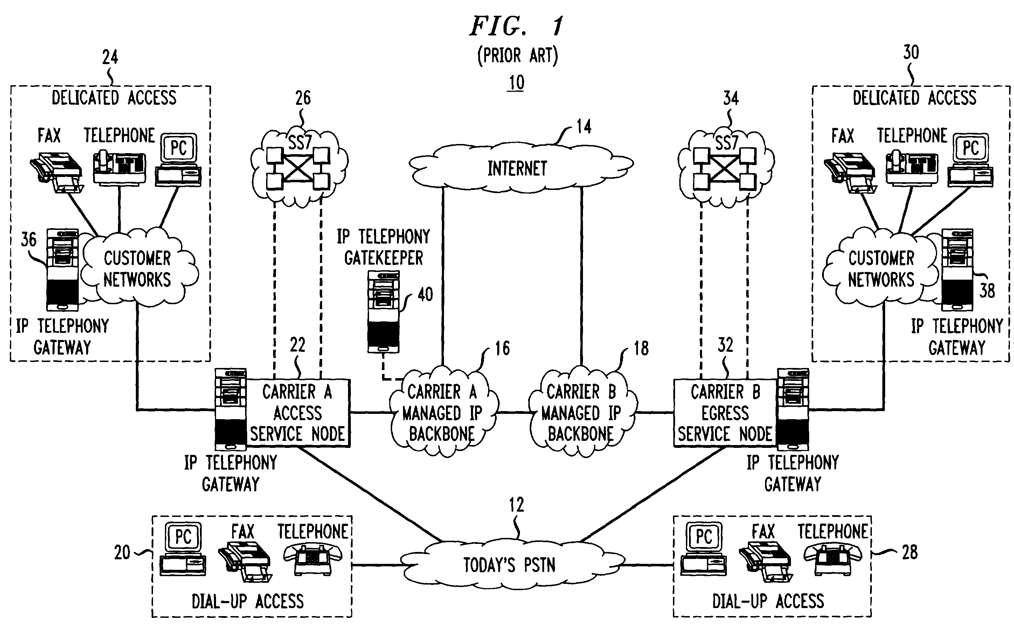

An exemplary prior art arrangement 10 for providing IP services (such as, for example, IP telephony) is illustrated in FIG. 1. The arrangement as shown includes, illustratively, both a conventional public-switched telephone network (PSTN) 12 and the Internet 14 as one of the transport vehicles for providing communication between the network of Carrier A (as the origination carrier in this example) and the network of Carrier B (as the destination carrier in this example). It is to be understood that throughout this discussion the term "carrier" refers generally to a telephone carrier who provides IP network transport, as well as to IP network providers. Carrier A's network includes a managed IP backbone 16 and, similarly Carrier B's network includes a managed IP backbone 18. Both backbones 16 and 18 are connected to the Internet 14 (as well as being connected to each other). Each network includes numerous dial-up subscribers, as well as dedicated access customers. For the sake of clarity, arrangement 10 illustrates only one dial-up customer and one dedicated access customer for each network. In particular, a dial-up customer 20 associated with Carrier A is illustrated as initiating the transport of IP traffic through PSTN 12. Thereafter, the IP traffic from customer 20 is sent to an IP service node 22 within Carrier A's network, where service node 22 is considered an "access" node since it functions to aggregate traffic from various sources within Carrier A's network (when this network is the origination network). A dedicated access customer 24, who purchases transport directly from Carrier A, also sends its IP traffic to access service node 22. For IP telephony, call set-up for a call that terminates in the PSTN within Carrier A's network is handled via a signaling system, such as SS7 network 26 shown in FIG. 1.

Similarly, Carrier B's network will include a plurality of dial-up customers, such as illustrated customer 28 and a plurality of dedicated access customers, such as dedicated access customer 30. As with dial-up customer 20 of Carrier A's network. IP traffic originating at, or destined for, dial-up customer 28 must pass through PSTN 12. Carrier B's network further comprises a service node 32, in this case functioning as an egress node for distributing the IP traffic to the proper destinations. As with access service node 22, a signaling system such as SS7 34, is used as part of the call set-up to communicate to the voice network within Carrier B's network.

In general, any type of IP traffic may be transported between any pair of end-users, whether they are dedicated access or dial-up, regardless of whether they are located in the same network or different networks. As stated above, a problem with the current arrangement as illustrated in FIG. 1 is that there is no consistent methodology employed in handing off IP traffic across network boundaries. For example, with IP telephony, a call may be set up from an IP telephony gateway 36 within customer 24's network to an IP telephony gateway 38 within customer 30's network. An IP telephony gatekeeper 40, associated with Carrier A is used to identify the destination IP telephony address as part of the call set-up process to deliver the call. For certain types of traffic, such as IP telephony, a dropped connection, or dropped packets (common occurrences on the Internet) are problematic.

This limitation is addressed by the arrangement of the present invention, which relates to the implementation of a Service Level Agreement, as an enhancement to an established peering agreement, between two different networks. In particular, an existing peering agreement between Carriers A and B is enhanced to include QoS parameters to provide an agreed-upon level of service between the carriers' networks. As mentioned above, the QoS parameters may include such items as: bandwidth requirements for different types of IP traffic (e.g., applications such as IP telephony require a QoS so it can be delivered in a "high" priority traffic flow within the designated bandwidth), delay limits, jitter, noise limits, percentage package drop allowable, etc. Any other parameters, agreed to in advance by both parties, may be used and included as QoS parameters in the SLA. The use of bandwidth prioritization in an SLA between a pair of carriers may thus ensure that certain "high priority" traffic, such as IP telephony, is guaranteed transport across the network boundary. When using Routing Policy Specification Language (RPSL) to define the routing parameters, the QoS parameters forming the SLA may be added to this information as additional fields used RPSL.

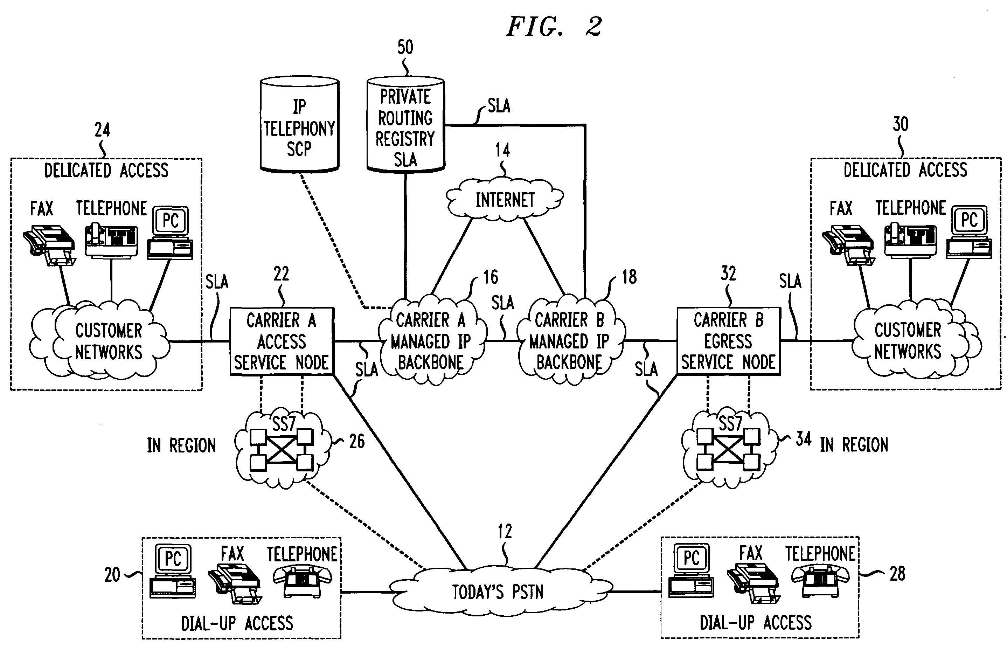

Referring to FIG. 2, communication arrangement 10 as discussed above in association with FIG. 1 is modified to include a "private" routing registry 50, located within Carrier A's network and, in accordance with the present invention, is enhanced to include a Service Level Agreement that has been agreed upon between Carrier A and Carrier B. Routing registry 50, as is currently known in the art, is a repository of routing policies and holds information regarding items such as routing policy details, routes and their aggregates, the logical topology between any two Autonomous Systems (ASes), network component identification, and administrative/technical contacts. In operation, when a bilateral SLA is established between Carriers A and B, a software tool (of conventional design) is used to automatically update the necessary routers within both networks. That is, a software tool is used to specifically configure the routers to recognize the various QoS parameters established between the parties and handle all IP traffic accordingly. In one exemplary embodiment where an entire T1 communication channel is available to carry traffic between Carrier A and Carrier B, 25% of the T1's bandwidth may be dedicated, according to the SLA, for the transport of IP telephony. The routers within each network will therefore be configured to reserve this capacity for IP telephony. In general, when the routing policy is retrieved from the routing registry by both networks, the QoS parameters are retrieved at the same time. The retrieved QoS parameters related to the SLA will be input to an automated process to configure the router to communicate with the other network to enable the QoS SLA between the two networks and to establish the enhanced peering agreement between the two networks.

In order to be an effective tool in the transport of IP telephony, the inter-network SLA resident within private routing registry 50 needs to be, at the outset, agreed upon by both Carriers A and B. In situations where the SLA is modified after its implementation, the QoS parameters need to be accessible and capable of being modified. Various security tools may be used to prevent anyone other than the parties involved with the SLA from accessing the SLA agreement. Referring to the arrangement of FIG. 2, for IP telephony being transported from Carrier A's network to Carrier B's network, managed IP backbone 16 of Carrier A may be used to provide "traffic shaping" for an IP service, such as IP telephony, so that only the traffic that can fit within the allocated bandwidth as defined by the SLA is attempted to be transmitted. Additionally, managed IP backbone 18 within Carrier network B provides "traffic policing" to ensure that only the agreed-upon allocation of traffic (as defined in the SLA) is allowed to enter the network.

It is to be understood that the above-described QoS parameters forming a Service Level Agreement are exemplary only; various other parameters (or adjustments to the referenced parameters) may be used for the implementation and control of IP traffic across network boundaries. In general, the scope of the present invention is considered to be limited only by the claims appended hereto.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An arrangement for improving the transport of IP traffic across boundary between a first carrier's network and a second carrier's network based upon an enhanced peering agreement, the arrangement comprising
a database for storing a service level agreement (SLA) including a plurality of quality of service (QoS) parameters agreed upon by said first and second carriers, the plurality of QoS parameters thereafter used to configure routers within each network to monitor the transport of IP traffic between the networks.

2. An arrangement as defined in claim 1 wherein the database further comprises routing information, with the QoS parameters included as an enhancement to an existing routing peering agreement.

3. An arrangement as defined in claim 2 wherein the routing information is defined in a routing policy language and the QoS parameters are included as additional fields in the routing information.

4. An arrangement as defined in claim 3 wherein the routing policy language comprises Routing Policy Specification Language (RPSL).

5. An arrangement as defined in claim 1 wherein the QoS parameters include a plurality of bandwidth allocations, each associated with a different priority of IP traffic.

6. An arrangement as defined in claim 4 wherein the QoS parameters further include propagation delay, allowable percentage of package drops, and jitter.

7. A method of providing a predetermined quality of service for IP traffic across a boundary between a first network and a second network as an enhanced peering agreement, the method comprising the step of
a) defining an inter-network service level agreement (SLA) between the first and second networks in addition to an existing network routing peering agreement, the inter-network SLA including a set of predetermined quality of service (QoS) parameters associated with different types of IP traffic.

8. The method as defined in claim 7 wherein the method comprises the further steps of:
b) providing the SLA defined in step a) in a database accessible by the first and second networks;
c) translating the QoS parameters into router configuration data;
d) automatically configuring router settings in the first and second networks; and, subsequently,
e) enabling shaping and policing of the data transported between the first and second networks in accordance with the QoS parameters of the SLA

9. The method as defined in claim 8 wherein in performing step b), providing the SLA as an enhancement to a routing registry accessed by the first and second networks.

10. The method as defined in claim 8 wherein in performing step a), the QoS parameters include a plurality of bandwidth allocations, each associated with a different priority of IP traffic.

11. The method as defined in claim 8 wherein in performing step a), the QoS parameters including bandwidth allocations, delay, percentage of allowable package drops and jitter.
